# EUROPEAN PATENT APPLICATION

(11) **EP 4 410 566 A1**
(43) Date of publication of application: **07.08.2024**
(21) Application number: 22874870.3
(22) Date of filing: 27.09.2022
(51) Int. Cl.: B60B 19/00, A01D 34/00, G05D 1/02, A47L 11/28

(54) **TRAVELING WHEEL, AUTONOMOUS OPERATION APPARATUS, AND METHOD FOR DETECTING STATE OF TRAVELING WHEEL**

(30) Priority: 29.09.2021 CN 202111154596; 27.04.2022 CN 202210451386; 27.04.2022 CN 202210450546; 27.04.2022 CN 202210451412; 27.04.2022 CN 202210450548; 27.04.2022 CN 202220991446 U; 27.04.2022 CN 202220991317 U
(71) Applicant: Zhejiang Sunseeker Industrial Co., Ltd., Jinhua, Zhejiang 321042 (CN)
(72) Inventor: CUI, Jiangwei, Jinhua, Zhejiang 321042 (CN); LIU, Fangshi, Jinhua, Zhejiang 321042 (CN); ZHOU, Chang, Jinhua, Zhejiang 321042 (CN); RAN, Yuanzhong, Jinhua, Zhejiang 321042 (CN); XIONG, Jian, Jinhua, Zhejiang 321042 (CN)
(74) Representative: Manna, Sara
(86) International application number: PCT/CN2022/121533
(87) International publication number: WO 2023/051485

(57) **Abstract**

Provided are a traveling wheel (2), an autonomous operation apparatus (100), and a method for detecting a state of the traveling wheel (2), which relate to the technical field of autonomous operation apparatuses. The traveling wheel (2) has a wheel body (20). The wheel body (20) comprises a hub portion (202), a rim portion (204), at least one accommodating cavity (206) configured between the hub portion (202) and the rim portion (204), and at least one magnetic component (4) arranged in the accommodating cavity (206), the magnetic component (4) being configured to be capable of rolling over in the accommodating cavity (206) in at least one preset direction. The magnetic component (4) can cause a change in a magnetic field when rolling over in the accommodating cavity (206), so as to generate a detectable magnetic field change signal, and then, the rotation state of the traveling wheel (2) can be determined on the basis of the magnetic field change signal.

## Description

### Related applications cross-reference

This patent application claims priority to Chinese patent applications with application numbers 2022104513862 for invention titled 'Traveling wheel, autonomous operation device, and traveling wheel state detection method'; 2022104505461 for invention titled 'Autonomous operation device and traveling abnormality detection method'; 2022104514121 for invention titled 'Traveling wheel, autonomous operation device, and traveling wheel state detection method'; 2022104505480 for invention titled 'Autonomous operation device'; 2022209914465 for invention titled 'Autonomous operation device'; and 2022209913176 for invention titled 'Traveling wheel and autonomous operation device', all filed on September 29, 2021. The full texts of the above applications are incorporated herein by reference.

### Technical Field

The present application relates to the technical field of autonomous operation devices, and in particular, to a traveling wheel, an autonomous operation device, and a traveling wheel state detection method.

### Background

A robot mower is an automatic operation device used for trimming a lawn, vegetation, and the like. The robot mower has been widely used in daily life and has brought great convenience to people's lives.

The robot mower usually works on the lawn and is prone to slipping. When the slipping is severe, the lawn is severely worn. How to identify and detect slipping is an urgent problem to be solved.

### Summary

An aspect of the present application aims to provide a traveling wheel, an autonomous operation device, and a traveling wheel state detection method. When a magnetic assembly rolls in a receiving cavity, a magnetic field can change to generate a magnetic field change signal that can be detected, and then a rotation state of the traveling wheel can be determined based on the magnetic field change signal.

To achieve the above objective, an embodiment of the present application provides a traveling wheel including a wheel body, wherein the wheel body includes a hub portion, a rim portion, at least one receiving cavity configured between the hub portion and the rim portion, and at least one magnetic assembly disposed inside the receiving cavity; and the magnetic assembly is configured to roll towards at least one preset direction within the receiving cavity.

An embodiment of the present application provides an autonomous operation device, comprising: a main mechanism; a moving mechanism, wherein the moving mechanism is disposed on the main mechanism, the moving mechanism is used for supporting the main mechanism on a travel surface and driving the main mechanism to move on the travel surface, and the moving mechanism comprises the traveling wheel as mentioned above; a working mechanism, wherein the working mechanism is disposed on the main mechanism, and the working mechanism is used for performing an operation task; a control module, wherein the control module is disposed on the main mechanism, and the control module is used for controlling the working mechanism to perform a set operation task according to a received control instruction; and a detection module, wherein the detection module comprises a first sensor in communication connection with the control module, and the first sensor is used for obtaining a magnetic field change signal generated by movement of the magnetic assembly in the traveling wheel; wherein the control module is used for determining a rotation state of the traveling wheel according to the magnetic field change signal.

An aspect of the present application aims to provide an autonomous operation device and a traveling abnormality detection method, which can combine the rotation status of the driving wheel and the rotation status of the driven wheel to determine whether the autonomous operation device has a traveling abnormality, so as to take corresponding measures in a timely manner when a traveling abnormality occurs.

To achieve the above objective, an embodiment of the present application provides an autonomous operation device, comprising: a main mechanism; a moving mechanism, wherein the moving mechanism is disposed on the main mechanism, the moving mechanism is used for supporting the main mechanism on a travel surface and driving the main mechanism to move on the travel surface, and the moving mechanism comprises a driving wheel and a driven wheel, the driven wheel comprising at least one receiving cavity and a magnetic assembly configured to roll towards at least one preset direction within the receiving cavity; a working mechanism, wherein the working mechanism is disposed on the main mechanism, and the working mechanism is used for performing an operation task; a control module, wherein the control module is disposed on the main mechanism, and the control module is used for controlling the working mechanism to perform a set operation task according to a received control instruction; a first sensor, in communication connection with the control module, is used for obtaining a magnetic field change signal generated by movement of the magnetic assembly in the traveling wheel; a second sensor, in communication connection with the control module, is used to detect the rotation state of the driven wheel; the control module is used to determine the rotation state of the driven wheel based on the magnetic field change signal; the control module is used to detect the rotation state of the driving wheel through the second sensor; the control module is used to determine whether the autonomous operation device is in a traveling abnormal state based on the rotation state of the driving wheel and the rotation state of the driven wheel.

This application also provides a method for detecting the state of traveling wheels, applied to autonomous operation devices, wherein the autonomous operation device comprises driving wheels and driven wheels, and the driven wheels comprise at least one receiving cavity, and a magnetic assembly disposed in the receiving cavity capable of freely rolling in at least one predetermined direction; the method comprises: detecting the rotation state of the driving wheels and the rotation state of the driven wheels, wherein, according to the magnetic field change signal generated by the motion of the magnetic assembly in the driven wheels obtained, determining the rotation state of the driven wheels; based on the rotation state of the driving wheels and the rotation state of the driven wheels, determining whether the autonomous operation device is in an abnormal traveling state.

As an aspect of this application, it aims to provide autonomous operation devices and a method for adding or removing functionalities of the autonomous operation devices, capable of identifying the connection between the traveling wheel assembly and the mounting portion and/or the connection between the non-magnetic wheel assembly and the mounting portion via a third sensor, to adjust the working mode of the autonomous operation device based on the currently connected wheels to the mounting portion.

To achieve the above objectives, an embodiment of this application provides an autonomous operation device comprising: a main mechanism; a moving mechanism, wherein the moving mechanism is arranged on the main mechanism for supporting the main mechanism on a travel surface and driving the main mechanism to move on the travel surface; a mounting portion is provided on the moving mechanism; the mounting portion is selectively detachably connected to a traveling wheel assembly or a non-magnetic wheel assembly; a magnetic assembly capable of freely rolling in at least one predetermined direction is provided in the traveling wheel assembly; a working mechanism is arranged on the main mechanism for performing working tasks; a control module is arranged on the main mechanism for controlling the working mechanism to perform set working tasks according to received control instructions; a third sensor is communicatively connected to the control module; the third sensor is used to identify the connection between the traveling wheel assembly and the mounting portion and/or the connection between the non-magnetic wheel assembly and the mounting portion.

This application also provides a method for adding functionalities to autonomous operation devices, applied to the above autonomous operation device, comprising: installing a traveling wheel assembly containing magnetic assemblies on the mounting portion of the autonomous operation device; controlling the autonomous operation device to enter a working mode including abnormal traveling state detection.

This application also provides a method for adding functionalities to autonomous operation devices, applied to the above autonomous operation device, comprising: installing a non-magnetic wheel -assembly on the mounting portion of the autonomous operation device; controlling the autonomous operation device to enter a working mode without abnormal traveling state detection.

This application also provides a control method for autonomous operation devices, applied to the above autonomous operation device, comprising: when the connection between the traveling wheel -assembly and the mounting portion is identified via the third sensor, controlling the autonomous operation device to perform abnormal traveling state detection.

As an aspect of this application, it aims to provide autonomous operation devices capable of detecting the abnormal traveling state of the autonomous operation devices by combining the rotation state of the traveling wheels with the relative positional relationship between the autonomous operation device and the boundary of the working area.

To achieve the above objectives, an embodiment of this application provides autonomous operation devices comprising: a main mechanism; a moving mechanism, wherein the moving mechanism is arranged on the main mechanism for supporting the main mechanism on a travel surface and driving the main mechanism to move on the travel surface; the moving mechanism comprises traveling wheels, wherein magnetic assemblies are provided in the traveling wheels; a signal detection circuit comprises a first sensor, a signal processing circuit, and a processor connected in sequence; the first sensor is used to obtain a magnetic field change signal generated by the motion of the magnetic assembly in the traveling wheels and convert the magnetic field change signal into a first electrical signal; the first electrical signal indicates the rotation state of the traveling wheels; the first sensor is also used to obtain boundary signals for defining the boundary of the working area of the autonomous operation device and convert the boundary signals into a second electrical signal; the processor is used to determine the rotation state of the traveling wheels based on the first electrical signal; the processor is also used to determine the relative positional relationship between the autonomous operation device and the boundary of the working area based on the second electrical signal.

### Brief Description of the Drawings

FIG. 1 is a schematic diagram of a traveling wheel according to a first embodiment of the present application;
FIG. 2 is a cross-sectional view of the traveling wheel according to the first embodiment of the present application, with a cross-sectional line XO-XO in FIG. 1;
FIG. 3 is a schematic diagram of a magnetic assembly according to the first embodiment of the present application;
FIG. 4 is a top view of the magnetic assembly according to the first embodiment of the present application;
FIG. 5 is a cross-sectional view of the magnetic assembly according to the first embodiment of the present application;
FIG. 6 is a bottom view of the magnetic assembly according to the first embodiment of the present application;
FIG. 7 is a side view of the magnetic assembly according to the first embodiment of the present application;
FIG. 8 is an exploded view of the magnetic assembly according to the first embodiment of the present application;
FIG. 9 is a cross-sectional view of a magnetic body of the magnetic assembly according to the first embodiment of the present application;
FIG. 10 is an exploded view of a box body according to the first embodiment of the present application;
FIG. 11 is a cross-sectional view of the box body according to the first embodiment of the present application;
FIG. 12 is a cross-sectional view of the traveling wheel in one state according to the first embodiment of the present application, with the cross-sectional line XO-XO in FIG. 1;
FIG. 13 is a cross-sectional view of the traveling wheel in another state according to the first embodiment of the present application, with the cross-sectional line XO-XO in FIG. 1;
FIG. 14 is a schematic diagram of a traveling wheel assembly according to a second embodiment of the present application;
FIG. 15 is a cross-sectional view of the traveling wheel assembly according to the second embodiment of the present application, with a cross-sectional line X2-X2 in FIG. 14;
FIG. 16 is a schematic diagram of an autonomous operation device according to a third embodiment of the present application;
FIG. 17 is a partial cross-sectional view of the autonomous operation device according to the third embodiment of the present application, with the cross-sectional line X1-X1 in FIG. 16;
FIG. 18 is a top view of the autonomous operation device according to the third embodiment of the present application;
FIG. 19 is a top view of the autonomous operation device according to the third embodiment of the present application;
FIG. 20 is a schematic diagram of a magnetic field change signal when the traveling wheel of the autonomous operation device is in a rotating state according to the third embodiment of the present application;
FIG. 21 is a schematic diagram of a magnetic field change signal when the traveling wheel of the autonomous operation device is in a stop state according to the third embodiment of the present application;
FIG. 22 is a schematic diagram of a magnetic field change signal when the traveling wheel of the autonomous operation device is in a shaking state according to the third embodiment of the present application;
FIG. 23 is a schematic diagram of an autonomous operation device according to a fourth embodiment of the present application;
FIG. 24 is a schematic diagram of a signal detection circuit of an autonomous operation device according to a fifth embodiment of the present application;
FIG. 25 is a circuit structure diagram of a first signal channel according to the fifth embodiment of the present application;
FIG. 26 is a circuit structure diagram of a second signal channel according to the fifth embodiment of the present application;
FIG. 27 is a specific flowchart of a traveling wheel state detection method according to a sixth embodiment of the present application;
FIG. 28 is a specific flowchart of step 102 of the traveling wheel state detection method in FIG. 26;
FIG. 29 is a specific flowchart of a traveling wheel state detection method according to a seventh embodiment of the present application;
FIG. 30 is a specific flowchart of a method for adding a function to an autonomous operation device according to an eighth embodiment of the present application;
FIG. 31 is a specific flowchart of a method for removing a function from an autonomous operation device according to a ninth embodiment of the present application; and
FIG. 32 is a specific flowchart of a control method for an autonomous operation device according to a tenth embodiment of the present application.

### Detailed Description of the Embodiments

The following will provide a detailed explanation of various embodiments of the present application with reference to the accompanying drawings, in order to better understand the purpose, features, and advantages of the present application. It should be understood that the embodiments shown in the drawings are not limitations to the scope of the present application, but are only intended to illustrate the essence of the technical solution of the present application.

In the description below, certain specific details are elucidated for the purpose of explaining various public implementation examples to provide a thorough understanding of various public implementation examples. However, those skilled in the art will recognize that implementations can be practiced without one or more of these specific details. In other instances, well-known devices, structures, and techniques associated with the present application may not be shown or described in detail to avoid unnecessarily obscuring the description of the implementations.

Unless the context requires otherwise, in the entire specification and claims, the terms "including" and its variants, such as "includes" and "having," should be understood in an open, inclusive sense, i.e. should be interpreted as "including, but not limited to."

Throughout the specification, the mention of "an embodiment" or "one embodiment" indicates that specific features, structures, or characteristics described in the embodiment are included in at least one embodiment. Therefore, the appearance of "in one embodiment" or "in an embodiment" at various locations in the specification does not necessarily all refer to the same embodiment. Additionally, specific features, structures, or characteristics may be combined in any way in one or more embodiments.

The singular form 'a' and 'an' used in this specification and the appended claims include the plural, unless otherwise specified. It should be noted that the term 'or' is generally used in its inclusive sense of'and/or', unless otherwise specified.

In the following description, in order to clearly demonstrate the structure and operation of this application, many directional words will be used, such as 'front', 'back', 'left', 'right', 'outer', 'inner', 'outward', 'inward', 'up', 'down', etc. However, these words should be understood as convenient terms rather than restrictive terms.

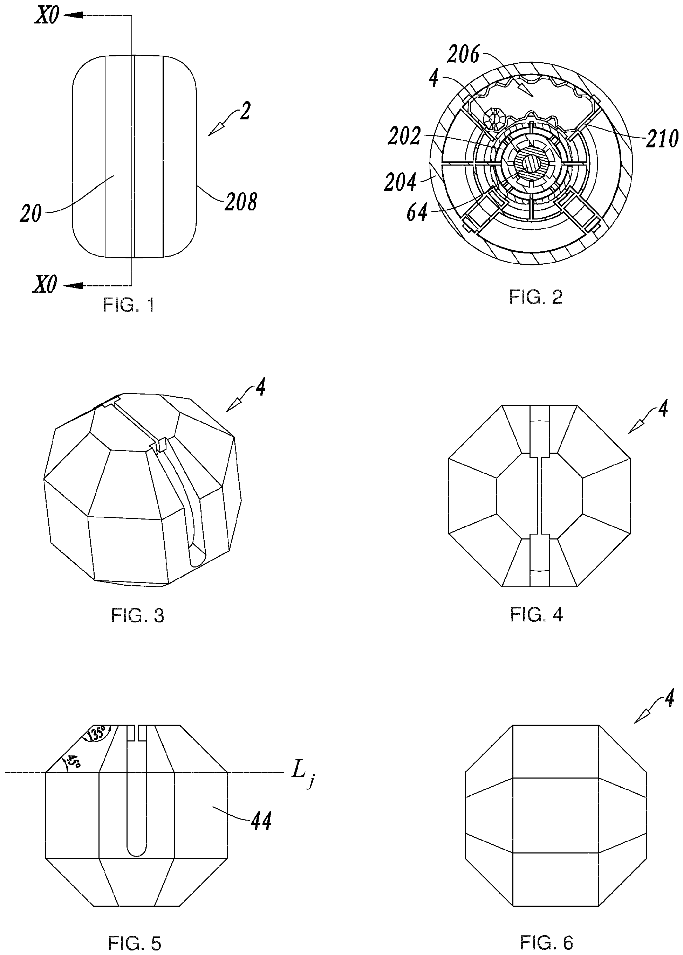

A first embodiment of the present application relates to a traveling wheel mounted on an autonomous operation device as a driving wheel and/or a driven wheel to support the autonomous operation device, such as a robot mower, to move on a travel surface. With reference to FIGs. 1 and 2, the traveling wheel 2 includes a wheel body 20, wherein the wheel body 20 includes a hub portion 202, a rim portion 204, at least one receiving cavity 206 configured between the hub portion 202 and the rim portion 204, and at least one magnetic assembly 4 disposed inside the receiving cavity 206. The magnetic assembly 4 is configured to roll towards at least one preset direction within the receiving cavity 206. The preset direction is a direction perpendicular to a rotation axis of the traveling wheel 2, including a traveling direction of the traveling wheel. It should be noted that only one receiving cavity 206 is disposed in the traveling wheel 2 as an example in this embodiment and subsequent embodiments, and there is no limitation on a quantity of receiving cavities 206 in the traveling wheel 2.

In the rolling process of the traveling wheel 2, the magnetic assembly 4 in the traveling wheel 2 can roll in the receiving cavity 206 to change a magnetic field and generate a magnetic field change signal that can be detected, so as to determine a rotation state of the traveling wheel 2 based on the magnetic field change signal.

A specific structure of the magnetic assembly 4 will be explained below.

In one embodiment, an outer contour of the magnetic assembly 4 is in any of the following shapes: sphere, cylinder, frustum, bipyramid, bifrustum, biconical column, biconical frustum, prism, or convex polyhedron. In one example, the outer contour of the magnetic assembly is in a shape of a regular hexahedron, a regular dodecahedron, a regular icosahedron, or a double regular N pyramid stand, where N is an integer greater than or equal to 3 and less than or equal to 10. In one example, the outer contour of the magnetic assembly 4 is cylindrical, and the magnetic assembly 4 is a magnet with a circular cross section radially magnetized based on the outer contour of the magnetic assembly 4.

Preferably, with reference to FIGs. 3 to 7, N is equal to 8, so that the magnetic assembly 4 has a good rolling effect. Specifically, the outer contour of the magnetic assembly 4 is in a shape of a double regular octagonal pyramid column, with an angle of 135 degrees between a bottom (or top) surface and an adjacent trapezoidal surface, and an angle of 45 degrees between the trapezoidal surface and the cross section of the magnetic assembly 4 along a line Lj.

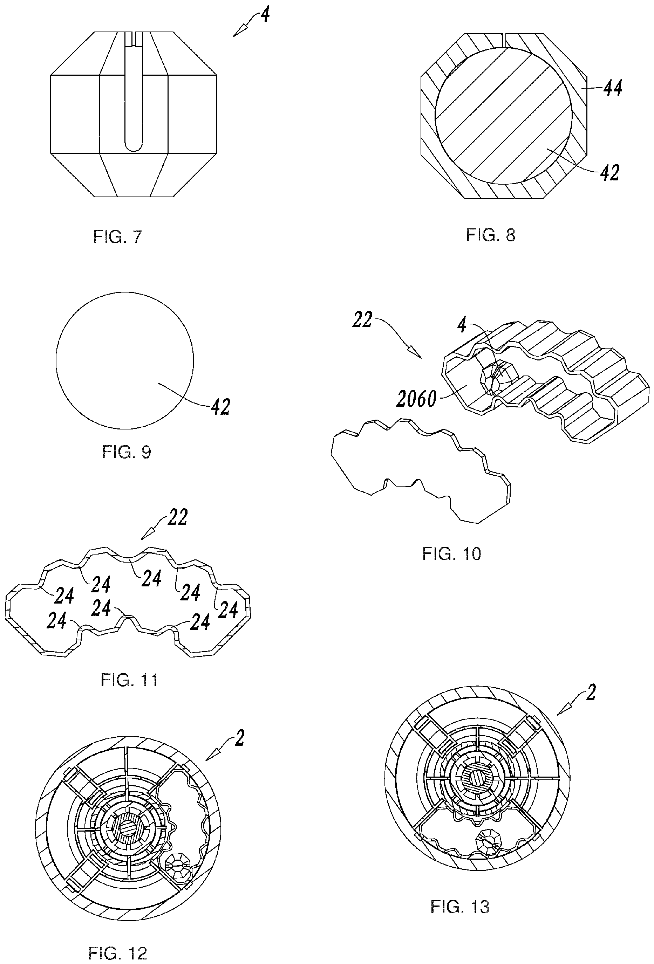

In one embodiment, with reference to FIGs. 8 and 9, the magnetic assembly 4 includes: a magnetic body 42 and a cover body 44 covering the magnetic body 42. The cover body 44 is made of an elastic material, which reduces impact force borne by the magnetic body 42 during the rolling of the magnetic assembly 4, so as to avoid damage of the magnetic body 42 during the rolling and prolong the service life of the magnetic assembly 4. The elastic material is, for example, rubber; and a preferred elastic material is silicone rubber.

In one embodiment, the magnetic assembly 4 has a first feature line, which is a longest line segment among lines connecting any two points on an outer surface of the magnetic assembly 4; and the first feature line of the magnetic assembly 4 may rotate a preset angle towards the at least one preset direction.

In one embodiment, a magnetic moment feature line obtained by connecting any two points on the outer surface of the magnetic assembly 4 is parallel to a magnetic moment direction of the magnetic assembly, and the magnetic moment feature line of the magnetic assembly may rotate a preset angle towards the at least one preset direction.

In this embodiment, the preset angle is greater than or equal to 90 degrees. Preferably, the preset angle is greater than or equal to 180 degrees.

A specific structure of the receiving cavity 206 will be explained below in conjunction with FIGs. 1, 2, and 10 to 13.

In one embodiment, the receiving cavity 206 is an arc-shaped cavity extending in a circumferential direction of the traveling wheel 2, and the preset direction includes a rolling direction of the traveling wheel. That is, the receiving cavity 206 is an arc-shaped cavity similar to the hub portion 202 in shape. When the traveling wheel 2 rotates, the magnetic assembly 4 inside the receiving cavity 206 rolls towards the rolling direction of the traveling wheel 2.

In one embodiment, the traveling wheel 2 includes at least one box body 22, the box body 22 is disposed between the hub portion 202 and the rim portion 204, and an inner cavity of the box body 22 forms the receiving cavity 206. That is, the inner cavity of the box body 22 forms the receiving cavity 206, and the box body 22 may be assembled between the hub portion 202 and the rim portion 204 to form the receiving cavity 206 between the hub portion 202 and the rim portion 204.

In one embodiment, the traveling wheel 2 further includes a wheel cover portion 208, a wheel inner cavity is enclosed by the wheel cover portion 208, the rim portion 204, and the hub portion 202, and the receiving cavity 206 is formed by the wheel inner cavity, that is, the wheel inner cavity is the receiving cavity 206.

In one embodiment, the traveling wheel 2 further includes a wheel cover portion 208, and a wheel inner cavity is closed by the wheel cover portion 208, the rim portion 204, and the hub portion 202; the wheel inner cavity is configured to include rib plates 210; and the receiving cavity 206 is enclosed by the rib plates 210, or by the rib plates 210 and the wheel cover portion 208 and/or the rim portion 204. Specifically, the rib plates 210 are connected between the hub portion 202 and the rim portion 204, the receiving cavity 206 may be enclosed by the rib plates 210, or the receiving cavity 206 may be enclosed by the rib plates 210 and the wheel cover portion 208, or the receiving cavity 206 may be enclosed by the rib plates 210 and the rim portion 204, or the receiving cavity 206 may be enclosed by the rib plates 210, the wheel cover portion 208, and the rim portion 204.

In this embodiment, the receiving cavity 206 may be configured as a sealed cavity, which can achieve water proofing and/or dust proofing, prevent dust or water from entering the receiving cavity 206 to affect the rolling of the magnetic assembly 4 in the receiving cavity 206, and prolong the service life of the magnetic assembly 4 in the receiving cavity 206.

In this embodiment, with reference to FIGs. 2, 12, and 13, when the rotation axis of the traveling wheel 2 is parallel to the travel surface, projections of at least some receiving cavities 206 on the travel surface fall within a projection of the rim portion 204 on the travel surface.

In one embodiment, with reference to FIGs. 10 and 11, the receiving cavity 206 includes a cavity inner wall 2060 in contact with the outer surface of the magnetic assembly 4, a stop structure is disposed on the cavity inner wall 2060, and the stop structure is used for limiting sliding of the magnetic assembly 4 along the cavity inner wall 2060 in the preset direction. The stop structure is disposedon the cavity inner wall 2060 of the receiving cavity 206 to prevent the magnetic assembly 4 from sliding in the receiving cavity 206 when the traveling wheel 2 is stationary.

In this embodiment, the stop structure includes a plurality of ridges 24, and each ridge 24 is parallel to the rotation axis of the traveling wheel 2. When the magnetic assembly 4 is stationary between two adjacent ridges 24, the magnetic assembly 4 is in contact with at least one ridge 24 in the two adjacent ridges 24 and the cavity inner wall 2060 between the two adjacent ridges 24. Specifically, an arc-shaped cavity is used as an example of the receiving cavity 206, the cavity inner wall 2060 of the receiving cavity 206 may be divided into an upper arc-shaped inner wall and a lower arc-shaped inner wall as a left planar inner wall and a right planar inner wall, and the plurality of ridges 24 may be evenly distributed on the two arc-shaped inner walls. When the magnetic assembly 4 is stationary in the receiving cavity 206, the magnetic assembly 4 may be located in a groove formed by the two ridges 24 on the arc-shaped inner wall. In this case, the magnetic assembly 4 at least abuts against two surfaces opposite to the two adjacent ridges 24 and two surfaces in the arc-shaped inner wall between the two adjacent ridges 24, or is located in a groove formed by a ridge 24 and the planar inner wall on the arc-shaped inner wall.

A height of the ridge 24 may be configured to be greater than or equal to half of a length of a second feature line, and the second feature line is a longest line segment among line segments formed by connecting a center of the magnetic assembly 4 with any point on the outer surface of the magnetic assembly 4. Further, the height of the ridge 24 is greater than or equal to two thirds of the length of the second feature line, which can enable the magnetic assembly 4 to have better stability in the receiving cavity 206.

In one embodiment, a static friction coefficient between the cavity inner wall 2060 and the outer surface of the magnetic assembly 4 is greater than or equal to 0.3, which prevents the magnetic assembly 4 from sliding in the receiving cavity 206. Further, the static friction coefficient between the cavity inner wall 2060 and the outer surface of the magnetic assembly 4 is greater than or equal to 0.5 to achieve a better anti-slip effect.

In one embodiment, the receiving cavity 206 includes a cavity inner wall 2060 in contact with the outer surface of the magnetic assembly 4, and texture structures are configured on the cavity inner wall 2060 and/or the outer surface of the magnetic assembly 4 to increase friction force between the cavity inner wall 2060 and the outer surface of the magnetic assembly 4, so as to prevent the magnetic assembly 4 from sliding in the receiving cavity 206. The texture structures are, for example, leather grains.

A second embodiment of the present application relates to a traveling wheel assembly for detachable assembly on an autonomous operation device, wherein the traveling wheel included in the traveling wheel assembly may be used as a driving wheel and/or a driven wheel.

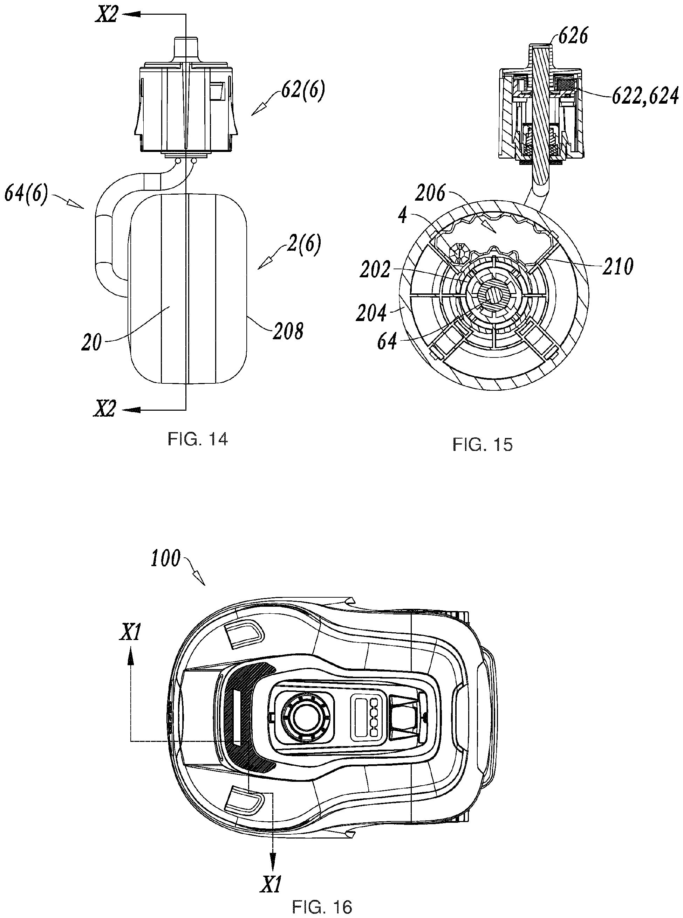

With reference to FIGs. 14 and 15, the traveling wheel assembly 6 includes a mounting seat 62, an axle 64, and the traveling wheel 2 in the first embodiment (namely, the traveling wheel 2 includes a rollable magnetic assembly 4, as detailed in the foregoing embodiment); the wheel body 20 of the traveling wheel 2 includes a hub portion 202 and a rim portion 204; a first end 642 of the axle 64 is connected to the hub portion 202, and the wheel body 20 may rotate around the first end 642 of the axle 64; and a second end 644 of the axle 64 is connected to the mounting seat 62, and the mounting seat 62 is detachably connected to a mounting portion 112 on the autonomous operation device.

In one example, the traveling wheel assembly 6 further includes a sensing member mounted on the mounting seat 62, and whether the traveling wheel assembly 6 is mounted may be determined through the sensing member.

A third embodiment of the present application relates to an autonomous operation device. The autonomous operation device, a stop station, and a boundary form an autonomous work system. The autonomous operation device may move autonomously within a set work area and perform a set operation task. The autonomous operation device is, for example, a robot vacuum cleaner/vacuum cleaner for cleaning operations, or a robot mower for mowing operations. The set operation task refers to work content that a state of a working surface changes when the working surface is processed.

The autonomous operation device includes: a main mechanism; a moving mechanism, wherein the moving mechanism is disposed on the main mechanism, for example, fixed together with the main mechanism, the moving mechanism is used for supporting the main mechanism on the travel surface and driving the main mechanism to move on the travel surface, and the moving mechanism includes the foregoing traveling wheel; a working mechanism, wherein the working mechanism is disposed on the main mechanism, for example, fixed together with the main mechanism, and the working mechanism is used for performing an operation task; a control module, wherein the control module is disposed on the main mechanism, for example, fixed together with the main mechanism, and the control module is used for controlling the working mechanism to perform a set operation task according to a received control instruction; and a detection module, wherein the detection module includes a first sensor in communication connection with the control module, and the first sensor is used for obtaining a magnetic field change signal generated by movement of the magnetic assembly in the traveling wheel; the control module is used for determining a rotation state of the traveling wheel according to the magnetic field change signal.

With reference to FIGs. 16 to 19, a robot mower is used as an example of the autonomous operation device 100. The autonomous operation device 100 includes: a main mechanism 102, a moving mechanism 104, a working mechanism 106, an energy module, a detection module 110, an interaction module, a control module 108, and the like.

The main mechanism 102 includes a chassis and a housing, wherein the chassis is used for mounting and accommodating functional mechanisms and functional modules such as the moving mechanism 104, the working mechanism 106, the energy module, the detection module 110, the interaction module, and the control module 108. The housing is usually configured to at least partially cover the chassis, and mainly functions to enhance aesthetics and recognition of the autonomous operation device 100. The housing is configured to be able to translate and/or rotate relative to the chassis in a resettable manner under external force, and matches up the appropriate detection modules 110, such as a Hall sensor, to further sense events such as collision and lifting.

The moving mechanism 104 is configured to support the main mechanism 102 on the ground and drive the main mechanism 102 to move on the ground, and is usually a wheeled moving mechanism, a tracked or half-tracked moving mechanism, a walking moving mechanism, or the like.

In this embodiment, the moving mechanism 104 is a wheeled moving mechanism, including at least one driving wheel 42 and at least one traveling prime mover 1040. The traveling prime mover 1040 is preferably a motor, or an internal combustion engine or a machine powered by other types of energy in other embodiments. In this embodiment, a left driving wheel, a left traveling prime mover for driving the left driving wheel, a right driving wheel, and a right traveling prime mover for driving the right driving wheel are preferably provided. In this embodiment, straight travel of the autonomous operation device 100 is implemented by rotation of the left and right driving wheels in the same direction and at an equal speed, and turning travel is implemented by same-direction differential speeds or opposing rotation of the left and right driving wheels. In other embodiments, the moving mechanism 104 may further include a turning mechanism independent of the driving wheel and a turning prime mover independent of the traveling prime mover 1040. In this implementation, the moving mechanism 104 further includes at least one driven wheel 44, the driven wheel 44 is typically configured as a universal wheel, and the driving wheel 42 and the driven wheel 44 are located at front and rear ends of the autonomous operation device 100 separately.

The working mechanism 106 is configured to perform the set operation task, and the working mechanism 106 includes work pieces and a working prime mover 1060 for driving the work pieces to operate. For example, for a robot vacuum cleaner/vacuum cleaner, the work pieces include a roller brush, a dust suction pipe, a dust chamber, and the like. For an intelligent lawn mower, the work pieces include a cutting blade or cutter head 1062, and further include other components for optimizing or adjusting the mowing effect, such as a height adjustment mechanism for adjusting the mowing height. The working prime mover 1060 is preferably a motor, or an internal combustion engine or a machine powered by other types of energy in other embodiments. In other embodiments, the working prime mover 1060 and the traveling prime mover 1040 are configured as the same prime mover, that is, the same prime mover drives the work pieces and the driving wheel.

The energy module is configured to provide energy for various operations of the autonomous operation device 100. In this embodiment, the energy module includes a battery and a charging connection structure, wherein the battery is preferably a rechargeable battery, and the charging connection structure is preferably a charging electrode that can be exposed outside the autonomous operation device.

The detection module 110 includes at least one sensor for sensing environmental parameters or working parameters of the autonomous operating device 1000. For example, the detection module 110 may include sensors related to the limit of a work area, such as magnetic induction, collision, ultrasonic, infrared, and radio sensors, and types of the sensors are adapted to the positions and quantity of corresponding signal generation apparatuses. The detection module 110 may further include sensors related to positioning and navigation, such as a GPS positioning apparatus, a laser positioning apparatus, an electronic compass, an acceleration sensor, a milemeter, an angle sensor, and a geomagnetic sensor. The detection module 110 may further include sensors related to its own work safety, such as an obstacle sensor, a lifting sensor, and a battery pack temperature sensor. The detection module 110 may further include sensors related to the external environment, such as an environmental temperature sensor, an environmental humidity sensor, a light sensor, and a rain sensor.

The interaction module is configured to at least receive control instruction information input by users, send information to be perceived by users, communicate with other systems or devices to transmit and receive information, and the like. In this embodiment, the interaction module includes an input apparatus disposed on the autonomous operation device 100 to receive control instruction information input by users, typically such as a control panel and emergency stop button. The interaction module further includes a display screen, an indicator light and/or a buzzer disposed on the autonomous operation device 100, and enables users to perceive information by emitting light or sound. In other embodiments, the interaction module includes a communication module disposed on the autonomous operation device 100 and a terminal device independent of the autonomous operation device 100, such as a mobile phone, a computer, or a network server. User's control instruction information or other information may be input on the terminal device and arrives at the autonomous operation device 100 via the wired or wireless communication module.

The control module 108 usually includes at least one processor and at least one non-volatile memory, the memory stores a pre-written computer program or instruction set, and the processor controls the execution of actions such as movement and work of the autonomous operation device 100 according to the computer program or instruction set. Further, the control module 108 can also control and adjust corresponding actions of the autonomous operation device 100, modify parameters in the memory, and the like according to the signals of the detection module 110 and/or user control instructions.

The boundary is used for limiting the work area of a robot system, and usually includes an outer boundary and an inner boundary. The autonomous operation device 100 is limited to moving and working within the outer boundary, outside the inner boundary, or between the outer boundary and the inner boundary. The boundary may be physical, typically such as a wall, a fence, or a railing. The boundary may alternatively be virtual, typically such as virtual boundary signals sent out by a boundary signal generation apparatus, wherein the virtual boundary signals are usually electromagnetic signals or optical signals. Alternatively, for an autonomous operation device 100 provided with a positioning apparatus (such as GPS), virtual boundaries are disposed in an exemplary electronic map formed by two-dimensional or three-dimensional coordinates. In this embodiment, the boundary is configured as a closed live wire electrically connected to the boundary signal generation apparatus, and the boundary signal generation apparatus is usually disposed in the stop station.

The stop station is usually configured on or within the boundary to stop the autonomous operation device 100 and can supply energy to the autonomous operation device 100 stopped at the stop station.

In this embodiment, the moving mechanism 104 includes at least one traveling wheel 2 in the first embodiment which can be used as a driving wheel or a driven wheel.

The detection module 110 includes a first sensor 1102which is in communication connection with the control module 108 in a wired or wireless manner.

The first sensor 1102 is used for obtaining a magnetic field change signal generated by the movement of the magnetic assembly 4 in the traveling wheel 2. Specifically, the first sensor 1102 includes a Hall sensor, or the first sensor 1102 includes an induction coil. Every time the magnetic assembly 4 moves, the first sensor 1102 can pick up a sine-like signal, thereby obtaining the magnetic field change signal generated by the movement of the magnetic assembly 4 in the traveling wheel 2, wherein the magnetic field change signal may be denoted as a first magnetic signal. Each first sensor 1102 is used for picking up the first magnetic signal generated when the magnetic assembly 4 in the corresponding traveling wheel 2 moves, and sending the picked first magnetic signal to the control module 108. In one example, a minimum distance between the magnetic assembly 4 in the traveling wheel 2 and the first sensor 1102 is not greater than 80 mm. Further, the minimum distance between the magnetic assembly 4 in the traveling wheel 2 and the first sensor 1102 is not greater than 50 mm.

In one example, when the traveling wheel 2 rotates, the magnetic assembly 4 rolls freely in the receiving cavity 206. There is a position that may be arrived at in the free rolling process of the magnetic assembly 4. At this position, the distance between the magnetic assembly 4 and the first sensor 1102 is not greater than the distance between the magnetic assembly 4 at any other position and the first sensor 1102. Accordingly, at this position, the distance between the magnetic assembly 4 and the first sensor 1102 is the minimum distance. A quotient of a radius of the traveling wheel 2 divided by the minimum distance between the magnetic assembly 4 in the traveling wheel 2 and the first sensor 1102 is less than or equal to 1.0. Further, the quotient of the radius of the traveling wheel 2 divided by the minimum distance between the magnetic assembly 4 in the traveling wheel 2 and the first sensor 1102 is less than or equal to 0.7, which can improve the accuracy of the first magnetic signal picked up by the first sensor 1102.

The control module 108 is used for determining the rotation state of the traveling wheel 2 according to the received first magnetic signal.

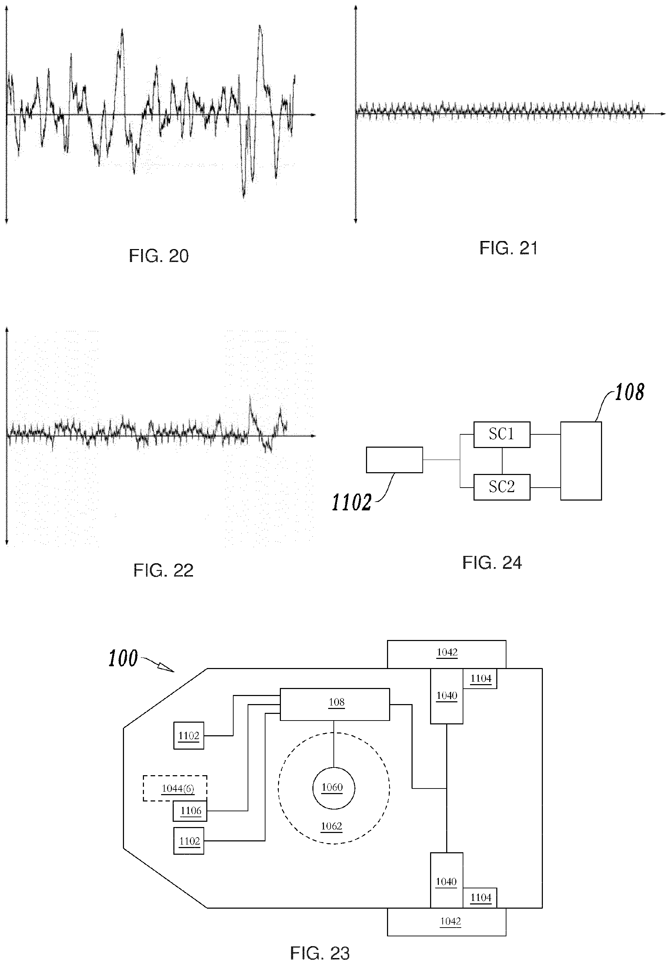

In this embodiment, when receiving the magnetic field change signal, the control module 108 determines whether the strength of the magnetic field change signal is beyond a preset strength range. If the strength of the magnetic field change signal is beyond the preset strength range, it is determined that the traveling wheel 2 is in a rotating state, referring to FIG. 20, which is a schematic diagram of a magnetic field change signal when the traveling wheel 2 is in a rotating state. If the strength of the magnetic field change signal is within the preset strength range, timing begins. If the strength of the magnetic field change signal remains within the preset strength range from the beginning of timing to a first preset time, it is determined that the traveling wheel 2 is in a non-rotating state. At this time, the traveling wheel 2 may be in a stopped state, referring to FIG. 21, which is a schematic diagram of a magnetic field change signal when the traveling wheel 2 is in the stopped state. Alternatively, the traveling wheel 2 is in a shaking state, referring to FIG. 22, which is a schematic diagram of a magnetic field change signal when the traveling wheel 2 is in the shaking state. The figure shows the magnetic field change signal when the traveling wheel 2 is in the shaking state. Although the strength of the magnetic field change signal is within the preset strength range, the strength of the magnetic field change signal will increases irregularly. The preset strength range includes an upper threshold and a lower threshold, and the lower threshold is less than the upper threshold. When receiving the magnetic field change signal, the control module 108 determines whether the strength of the magnetic field change signal is greater than or equal to the upper threshold or less than or equal to the lower threshold. If the strength of the magnetic field change signal is greater than or equal to the upper threshold or less than or equal to the lower threshold, it is determined that the traveling wheel 2 is in the rotating state, namely, the autonomous operation device 100 is in a traveling state. If the strength of the magnetic field change signal is between the upper threshold and the lower threshold, it is determined that the traveling wheel 2 is in the shaking state, namely, the autonomous operation device 100 is already in an on state but has not started working. In FIGs. 20 to 22, the abscissa represents time in milliseconds (ms), and the ordinate represents voltage in millivolts (mv).

In this embodiment, the control module 108 starts timing when any magnetic field change signal is not received. If any magnetic field change signal is still not received from the beginning of timing to a second preset time, it is determined that the traveling wheel 2 is in the non-rotating state. At this time, the traveling wheel 2 is in a stationary state.

In one embodiment, the moving mechanism 104 is provided with a mounting portion 112 selectively detachably connected to the traveling wheel assembly 6 or a non-magnetic wheel assembly 7, wherein a magnetic assembly 4 that may freely roll towards at least one preset direction is disposed in the traveling wheel assembly 6. A specific structure of the traveling wheel assembly 6 may be referenced to the traveling wheel assembly 6 in the second embodiment. No rollable magnetic assembly is disposed in the non-magnetic wheel assembly 7.

In one embodiment, the autonomous operation device 100 further includes a third sensor 1106 in communication connection with the control module 108, wherein the third sensor 1106 is used for recognizing adaption of the traveling wheel assembly 6 to the mounting portion 112 and/or adaption of the non-magnetic wheel assembly 7 to the mounting portion 112. That is, the third sensor 1106 is used for recognizing whether the wheel assembly adapted to the autonomous operation device 100 includes the magnetic assembly 4. A quantity of the third sensor 1106 may be configured according to a quantity of wheel assemblies assembled on the autonomous operation device 100, and each wheel assembly corresponds to a third sensor 1106 for detecting a type of the wheel assembly.

In this embodiment, the autonomous operation device 100 includes a plurality of working modes for detecting types of wheel assemblies, and a corresponding control program is loaded into the control module 108 of the autonomous operation device 100 in each working mode.

Specifically, when the non-magnetic wheel assembly 7 mounted on the mounting portion 112 of the autonomous operation device 100 is disassembled, and the traveling wheel assembly 6 including the magnetic assembly 4 is mounted on the mounting portion 112 of the autonomous operation device 100, the control module 108 controls the autonomous operation device 100 to enter the working mode including abnormal traveling state detection. The control module 108 updates the control program of the autonomous operation device 100 to load a program including abnormal traveling state detection into the control module 108 of the autonomous operation device 100. A way of updating the control program by the control module 108 may include: when the traveling wheel assembly 6 including the magnetic assembly 4 is mounted on the mounting portion 112 of the autonomous operation device 100, automatically updating the control program on line, or sending a reminder message to remind the user to update the control program, so that the user can manually update the control program by loading a program in an external storage device, or adjust a working mode switch on the autonomous operation device 100 to update the control program, or manually control the autonomous operation device 100 to be on line to update the control program.

When the non-magnetic wheel assembly 7 without the magnetic assembly 4 is mounted on the mounting portion 112 of the autonomous operation device 100, the autonomous operation device 100 is in a working mode without abnormal traveling state detection, that is, the control program of the autonomous operation device 100 does not include an abnormal traveling state detection program.

When the traveling wheel assembly 6 including the magnetic assembly 4 is mounted on the mounting portion 112 of the dismantling autonomous operation device 100, and the non-magnetic wheel assembly 7 is mounted on the mounting portion 112 of the autonomous operation device 100, the autonomous operation device 100 is controlled to enter the working mode without abnormal traveling state detection. The control module 108 updates the control program of the autonomous operation device 100 to load a control program without abnormal traveling state detection in the control module 108 of the autonomous operation device 100. A way of updating the control program by the control module 108 may include: when the non-magnetic wheel assembly 7 without the magnetic assembly 4 is mounted on the mounting portion 112 of the autonomous operation device 100, automatically updating the control program on line, or sending a reminder message to remind the user to update the control program, so that the user can manually update the control program by loading a program in an external storage device, or adjust a working mode switch on the autonomous operation device 100 to update the control program, or manually control the autonomous operation device 100 to be on line to update the control program.

In one example, the third sensor 1106 is a non-contact sensor; one of the traveling wheel assembly 6 and the non-magnetic wheel assembly 7 is providedwith a first sensing member; and the other is not provided with the first sensing member or provided with a second sensing member different from the first sensing member.

Specifically, types of sensing members corresponding to the traveling wheel assembly 6 and the non-magnetic wheel assembly 7 are preset in the control module 108, wherein the traveling wheel assembly 6 and the non-magnetic wheel assembly 7 correspond to different types of sensing members separately, for example: a first sensing member 622 is disposed in the traveling wheel assembly 6, a second sensing member 624 is disposed in the non-magnetic wheel assembly 7, a type of sensing member corresponding to the traveling wheel assembly 6 is the first sensing member 622, and a type of sensing member corresponding to the non-magnetic wheel assembly 7 is the second sensing member 624. In this case, when the third sensor 1106 detects that a sensing type of a wheel assembly is the first sensing member 622, the control module 108 determines that the wheel assembly is the traveling wheel assembly 6; or when the third sensor 1106 detects that a sensing type of a wheel assembly is the second sensing member 624, the control module 108 determines that the wheel assembly is the non-magnetic wheel assembly 7.

In this embodiment, when the first sensing member 622 is disposed in the traveling wheel assembly 6, the first sensing member 622 is mounted on the mounting seat 62 of the traveling wheel assembly 6; or when the second sensing member 624 is disposed in the traveling wheel assembly 6, the second sensing member 624 is mounted on the mounting seat 62 of the traveling wheel assembly 6.

In another example, the third sensor 1106 is a contact type sensor; one of the traveling wheel assembly 6 and the non-magnetic wheel assembly 7 is provided with a trigger structure, while the other is not provided with the trigger structure. For example, a trigger structure 626 is disposed on the traveling wheel assembly 6. When the third sensor 1106 is triggered by the trigger structure, the third sensor 1106 sends a trigger signal representing the trigger to the control module 108, and the control module 108 can determine that the wheel assembly is the traveling wheel assembly 6; or the control module 108 can determine that the wheel assembly corresponding to the third sensor 1106 that sends the trigger signal is the non-magnetic wheel assembly 7.

A fourth embodiment of the present application relates to an autonomous operation device. A traveling wheel state detection function is added to the autonomous operation device in this embodiment on the basis of the autonomous operation device in the third embodiment.

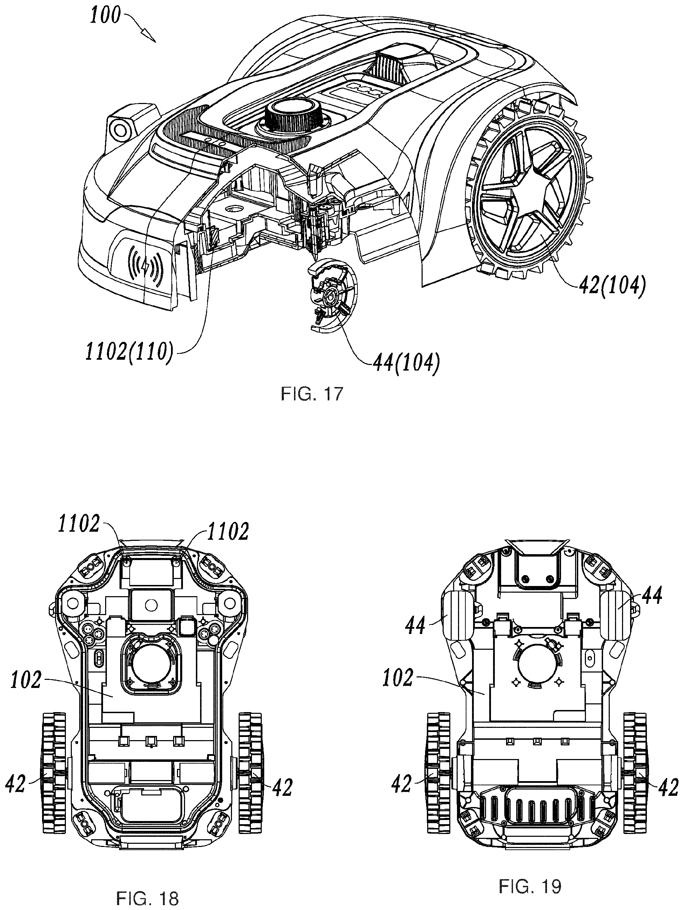

In this embodiment, with reference to FIGs. 19 to 23, the moving mechanism 104 includes a driving wheel and a driven wheel, wherein the driven wheel includes at least one receiving cavity 206 and a magnetic assembly 4 disposed in the receiving cavity 206 to roll freely towards at least one preset direction, that is, the driven wheel is the traveling wheel in the first embodiment.

The first sensor 1102 in the detection module 110 is used for obtaining a magnetic field change signal generated by the movement of the magnetic assembly 4 in the driven wheel.

The control module 108 is used for determining a rotation state of the driven wheel according to the magnetic field change signal.

The detection module 110 further includes a second sensor 1104, whereinthe second sensor 1104 is in communication connection with the control module 108.

The second sensor 1104 is used for detecting a rotation state of the driving wheel. Specifically, the second sensor 1104 may be used for reading operating parameters of the traveling prime mover 1040 for driving the driving wheel, and sending the operating parameters to the control module 108, so that the control module 108 can obtain the rotation state of the driving wheel.

In this embodiment, after obtaining the rotation state of the driven wheel through the first sensor 1102 and the rotation state of the driven wheel through the second sensor 1104, the control module 108 determines, according to the rotation state of the driving wheel and the rotation state of the driven wheel, whether the autonomous operation device is in an abnormal traveling state. The abnormal traveling state includes: a slipping state and/or a blocking state; in the slipping state, the driving wheel cannot move forward due to insufficient road holding, such as getting stuck in mud, the driving wheel is still rotating, but the autonomous operation device 100 does not move forward or moves slowly, and the driven wheel is in a non-rotating or slow rotating state; and in the blocking state, the autonomous operation device 100 encounters obstacles but does not trigger a collision protection function, the driving wheel is still rotating, the autonomous operation device 100 does not move forward, and the driven wheel is in a non-rotating state.

In one example, the control module 108 is used for determining that the autonomous operation device 100 is in the abnormal traveling state when an absolute value of a difference between a linear speed of the driving wheel and a linear speed of the driven wheel is greater than a preset speed difference threshold. When the difference in rotating linear speed between the driving wheel and the driven wheel is excessive, it is determined that the autonomous operation device 100 is in the abnormal traveling state.

In another example, the control module 108 determines that the autonomous operation device 100 is in the abnormal traveling state when the driving wheel is in the rotating state and the driven wheel is in the non-rotating state.

In one embodiment, the control module 108 controls the autonomous operation device 100 to perform a preset operation after determining that the autonomous operation device 100 is in the abnormal traveling state, the_preset operation including an escape action and/or an alarm action. The escape action is, for example, reverse traveling or turning; and the alarm action may be to send an alarm signal to a connected external electronic device (a computer, a mobile phone, or the like), or directly send an alarm voice notification through a speaker.

A fifth embodiment of the present application relates to an autonomous operation device. A signal detection circuit is added to the autonomous operation device in this embodiment on the basis of the autonomous operation device in the fourth or fifth embodiment.

In this embodiment, with reference to FIGs. 19 to 24, the signal detection circuit includes a first sensor 1102, a signal processing circuit, and a processor electrically connected in sequence, wherein the processor is located in the control module 108.

The first sensor 1102 is used for obtaining a magnetic field change signal generated by the movement of the magnetic assembly 4 in the traveling wheel 2, and converting the magnetic field change signal into a first electrical signal, which is used for indicating the rotation state of the traveling wheel 2.

The first sensor 1102 is further used for obtaining a boundary signal for defining a boundary of a work area of the autonomous operation device 100, and converting the boundary signal into a second electrical signal.

The control module 108 is used for determining the rotation state of the traveling wheel according to the first electrical signal.

The control module 108 is further used for determining a relative position relationship between the autonomous operation device 100 and the boundary of the work area according to the second electrical signal. The relative position relationship between the autonomous operation device 100 and the boundary of the work area includes: whether the autonomous operation device 100 travels outside a boundary line of the work area; the autonomous operation device 100 is controlled to travel along the line; a distance between the autonomous operation device 100 and the boundary line of the work area; an angle between a course of the autonomous operation device 100 and the boundary line of the work area, and the like.

In one example, the signal detection circuit includes a first signal channel SC1 and a second signal channel SC2, an input end of the first signal channel SC1 and an input end of the second signal channel SC2 are electrically connected to the first sensor 1102 separately, an output end of the first signal channel SC1 and an output end of the second signal channel SC2 are electrically connected to the control module 108 separately, and the output end of the first signal channel SC1 and the output end of the second signal channel SC2 are electrically connected to different pins of the control module 108 separately.

The first signal channel SC1 includes a first filter circuit, which is used for filtering out the second electrical signal.

The second signal channel SC2 includes a second filter circuit, which is used for filtering out the first electrical signal.

In this embodiment, the first sensor 1102 can pick up the magnetic field change signal and the boundary signal simultaneously, and filter out the second electrical signal converted from the boundary signal through the first filter circuit and the first electrical signal converted from the magnetic field change signal through the second filter circuit, to avoid mutual interference between the first electrical signal and the second electrical signal, so that the control module 108 can determine the rotation state of the traveling wheel based on the first electrical signal and adjust a working range of the operation device according to the second electrical signal.

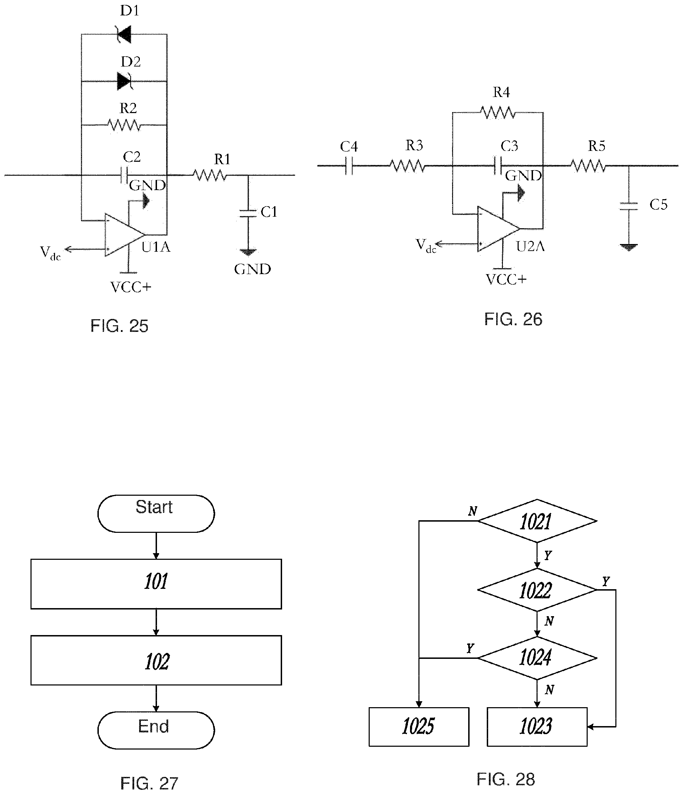

In this embodiment, the first signal channel SC1 further includes a first amplifier circuit, which is connected between the first sensor and the first filter circuit. In one example, the first filter circuit includes a first RC filter, and a cutoff frequency of the first RC filter is less than or equal to a minimum frequency of a second frequency band. Specifically, with reference to FIG. 25, in the first signal channel SC1, the first RC filter includes: a first resistor R1 and a first capacitor C1; the first amplifier circuit includes: an operational amplifier U1A, a second resistor R2, a second capacitor C2, a first diode D1, and a second diode D2, wherein a reverse input end of the first operational amplifier U1A is connected to the first sensor 1102, a positive input end of the first operational amplifier U1A is connected to a positive power voltage V_{dc}, a positive power pin of the first operational amplifier U1A is connected to VCC+, a ground pin of the first operational amplifier U1A is connected to GND, an output end of the first operational amplifier U1A is connected to one end of the first resistor R1, the second resistor R2 is connected in parallel between the reverse input end and output end of the first operational amplifier U1A, the second capacitor C2 is connected in parallel between the reverse input end and output end of the first operational amplifier U1A, a negative electrode of the first diode D1 is connected to the reverse input end of the first operational amplifier U1A, a positive electrode of the first diode D1 is connected to the output end of the first operational amplifier U1A, a positive electrode of the second diode D2 is connected to the reverse input end of the first operational amplifier U1A, and a negative electrode of the second diode D2 is connected to the output end of the first operational amplifier U1A; and the other end of the first resistor R1 is connected to one end of the first capacitor C1, the other end of the first capacitor C1 is grounded, and a junction between the first resistor R1 and the first capacitor C1 is connected to the control module 108. The second electrical signal converted from the boundary signal is of a narrow pulse. After entering the first signal channel SC1, the second electrical signal is filtered out by the first RC filter and will not interfere with the first electrical signal input to the control module 108. Similarly, interference generated by the traveling prime mover 1040 in the autonomous operation device 100 is also of a narrow pulse, and is also filtered out by the first RC filter.

In this embodiment, the second signal channel SC2 further includes a second amplifier circuit, which is connected between the first sensor and the second filter circuit. In one example, the second filter circuit includes a filter capacitor, and a capacitive reactance of the filter capacitor against the first electrical signal is greater than or equal to 100 kQ. Further, the second filter circuit further includes a second RC filter, which is used for filtering out narrow pulse interference generated by the traveling prime mover 1040 in the autonomous operation device 100. Specifically, with reference to FIG. 26, in the second signal channel SC1, the second amplifier circuit includes: a second operational amplifier U2A, a third resistor R3, a fourth resistor R4, and a third capacitor C3; the second filter circuit includes a filter capacitor C4; and the second RC filter includes a fifth capacitor C5 and a fifth resistor R5.

A reverse input end of the second operational amplifier U2A is connected to one end of the third resistor R3, the other end of the third resistor R3 is connected to one end of the filter capacitor C4, the other end of the filter capacitor C4 is connected to the first sensor 1102, a positive input end of the second operational amplifier U2A is connected to the positive power voltage V_{dc}, a positive power pin of the second operational amplifier U2A is connected to VCC+, a ground pin of the second operational amplifier U2A is connected to GND, the fourth resistor R4 is connected in parallel between the reverse input end and output end of the second operational amplifier U2A, the third capacitor C3 is connected in parallel between the reverse input end and output end of the second operational amplifier U2A, the output end of the second operational amplifier U2A is connected to one end of the fifth resistor R5, the other end of the fifth resistor R5 is connected to one end of the fifth capacitor C5, the other end of the fifth capacitor C5 is grounded, and the junction between the fifth resistor R5 and the fifth capacitor C5 is connected to the control module 108. The first electrical signal converted from the magnetic field change signal is a low-frequency slowly changing signal. A capacitance value of the filter capacitor C4 may be low (such as 0.1 uF), so that the capacitive reactance of the filter capacitor C4 against the first electrical signal is large to block the first electrical signal, whereby the magnetic field change signal will not interfere with the processing of the boundary signal in the control module 108.

In this embodiment, the first electrical signal has a first frequency band, the second electrical signal has a second frequency band, and the cutoff frequency of the first RC filter is less than or equal to the minimum frequency of the second frequency band. Preferably, the cutoff frequency of the first RC filter is less than or equal to half of the minimum frequency of the second frequency band. For example, the cutoff frequency of the first RC filter is less than or equal to 35 Hz.

In this embodiment, the first electrical signal has the first frequency band, the second electrical signal has the second frequency band, and a ratio of a maximum frequency of the first frequency band to the minimum frequency of the second frequency band is less than or equal to 1/3.

In this embodiment, a frequency range of the first frequency band is less than or equal to 10 Hz. Further, the frequency range of the first frequency band is less than or equal to 8 Hz. Further, the frequency range of the first frequency band is less than or equal to 5 Hz. Preferably, the frequency range of the first frequency band is 2 Hz-3 Hz.

In this embodiment, a frequency range of the second frequency band is 30 Hz-80 Hz. Preferably, the frequency range of the second frequency band is 60 Hz-70 Hz.

A sixth embodiment of the present application relates to a traveling wheel state detection method used for detecting the rotation state of the traveling wheel in the autonomous operation device 100 in the foregoing embodiment.

A specific process of the traveling wheel state detection method in this embodiment is as shown in FIG. 27.

Step 101: Obtain a magnetic field change signal generated by the movement of the magnetic assembly in the traveling wheel of the autonomous operation device.

Step 102: Determine the rotation state of the traveling wheel according to the magnetic field change signal.

In an example, with reference to FIG. 28, step 102 includes the following substeps:
Substep 1021: Determine whether the magnetic field change signal is received within a second preset time. If so, substep 1022 is performed; otherwise, substep 1025 is performed.
Substep 1022: Determine whether the strength of the magnetic field change signal is beyond a preset strength range. If so, substep 1023 is performed; otherwise, substep 1024 is performed.
Substep 1023: Determine that the traveling wheel is in a rotating state.
Step 1024: Determine whether the strength of the magnetic field change signal is within the preset strength range within the first preset time. If so, substep 1025 is performed; otherwise, substep 1023 is performed.
Step 1025: Determine that the traveling wheel is in a non-rotating state.

Specifically, when receiving the magnetic field change signal, the control module 108 determines whether the strength of the magnetic field change signal is beyond the preset strength range. If the strength of the magnetic field change signal is beyond the preset strength range, it is determined that the traveling wheel 2 is in the rotating state. If the strength of the magnetic field change signal is within the preset strength range, timing begins. If the strength of the magnetic field change signal remains within the preset strength range from the beginning of timing to the first preset time, it is determined that the traveling wheel 2 is in the non-rotating state, namely, the traveling wheel 2 is in a stationary state. If the strength of the magnetic field change signal is beyond the preset strength range from the beginning of timing to the first preset time, it is determined that the traveling wheel 2 is in the rotating state. The preset strength range includes an upper threshold and a lower threshold, and the lower threshold is less than the upper threshold. When receiving the magnetic field change signal, the control module 108 determines whether the strength of the magnetic field change signal is greater than or equal to the upper threshold or less than or equal to the lower threshold. If the strength of the magnetic field change signal is greater than or equal to the upper threshold or less than or equal to the lower threshold, it is determined that the traveling wheel 2 is in the rotating state, namely, the autonomous operation device 100 is in a traveling state. If the strength of the magnetic field change signal is between the upper threshold and the lower threshold, it is determined that the traveling wheel 2 is in the non-rotating state, namely, the autonomous operation device 100 is in a stationary state.

The control module 108 starts timing when any magnetic field change signal is not received. If any magnetic field change signal is still not received from the beginning of timing to a second preset time, it is determined that the traveling wheel 2 is in the non-rotating state, namely, the traveling wheel 2 is in the stationary state.

A seventh embodiment of the present application relates to an abnormal traveling detection method, which is used for abnormal traveling detection on the autonomous operation device 100 in the fourth embodiment. Refer to the relevant content in the fourth embodiment for the specific structure of the autonomous operation device 100, and details will not be repeated here.

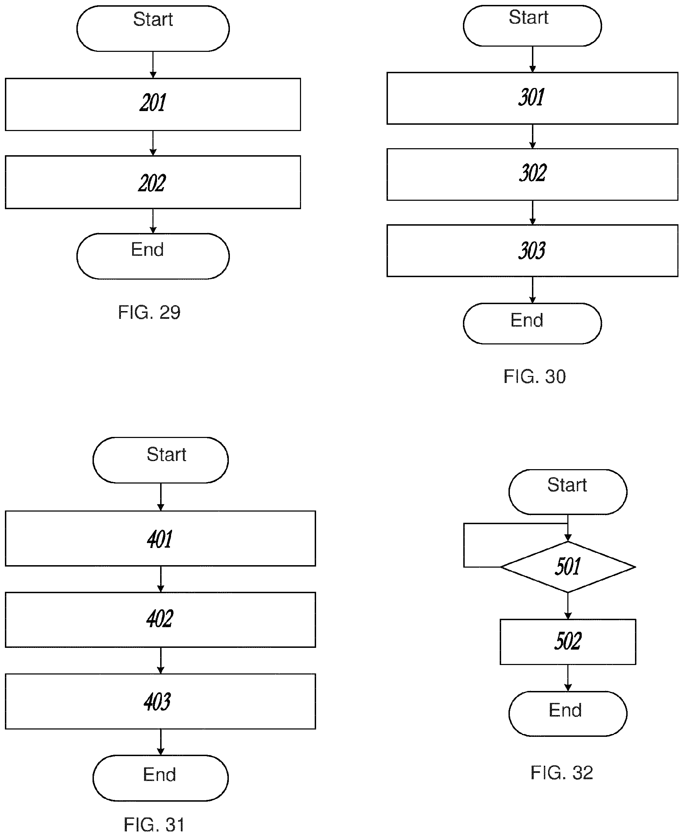

A specific process of the abnormal traveling detection method in this embodiment is as shown in FIG. 29.

Step 201: Detect the rotation state of the driving wheel and the rotation state of the driven wheel, wherein the rotation state of the driven wheel is determined according to the obtained magnetic field change signal generated by the movement of the magnetic assembly in the driven wheel.

Specifically, a second sensor 1104 is disposed in the detection module 110 of the autonomous operation device 100, and the second sensor 1104 is used for detecting the rotation state of the driving wheel. The second sensor 1104 may be used for reading operating parameters of the traveling prime mover 1040 for driving the driving wheel, and sending the operating parameters to the control module 108, so that the control module 108 can obtain the rotation state of the driving wheel.

The first sensor 1102 is used for obtaining the magnetic field change signal generated by the movement of the magnetic assembly 4 in the driven wheel, and sending the magnetic field change signal to the control module 108. The control module 108 can determine the rotation state of the driven wheel according to the magnetic field change signal.

Step 202: Determine whether the autonomous operation device is in an abnormal traveling state according to the rotation state of the driving wheel and the rotation state of the driven wheel.

Specifically, after obtaining the rotation state of the driven wheel through the first sensor 1102 and the rotation state of the driven wheel through the second sensor 1104, the control module 108 determines, according to the rotation state of the driving wheel and the rotation state of the driven wheel, whether the autonomous operation device is in the abnormal traveling state. The abnormal traveling state includes: a slipping state and/or a blocking state; in the slipping state, the driving wheel cannot move forward due to insufficient road holding, such as getting stuck in mud, the driving wheel is still rotating, but the autonomous operation device 100 does not move forward or moves slowly, and the driven wheel is in a non-rotating or slow rotating state; and in the blocking state, the autonomous operation device 100 encounters obstacles but does not trigger a collision protection function, the driving wheel is still rotating, the autonomous operation device 100 does not move forward, and the driven wheel is in a non-rotating state.

In an example, determining, according to the rotation state of the driving wheel and the rotation state of the driven wheel, whether the autonomous operation device is in the abnormal traveling state includes: determining that the autonomous operation device is in the abnormal traveling state if an absolute value of a difference between a linear speed of the driving wheel and a linear speed of the driven wheel is greater than a preset speed difference threshold. When the difference in rotating linear speed between the driving wheel and the driven wheel is excessive, it is determined that the autonomous operation device 100 is in the abnormal traveling state.

In another example, determining, according to the rotation state of the driving wheel and the rotation state of the driven wheel, whether the autonomous operation device is in the slipping state includes: determining that the autonomous operation device is in the abnormal traveling state when the driving wheel is in the rotating state and the driven wheel is in the non-rotating state. The control module 108 determines that the autonomous operation device 100 is in the abnormal traveling state when the driving wheel is in the rotating state and the driven wheel is in the non-rotating state.

In one embodiment, the control module 108 controls the autonomous operation device 100 to perform a preset operation after determining that the autonomous operation device 100 is in the abnormal traveling state, thepreset operation including an escape action and/or an alarm action. The escape action is, for example, reverse traveling or turning; and the alarm action may be to send an alarm signal to a connected external electronic device (a computer, a mobile phone, or the like), or directly send an alarm voice notification through a speaker.

An eighth embodiment of the present application provides a method for adding a function to an autonomous operation device, which is applied to the autonomous operation device in the third embodiment, and can control the autonomous operation device to switch to a working mode including abnormal traveling state detection after a traveling wheel assembly including a magnetic assembly is mounted in the autonomous operation device. Reference is made to the relevant content in the third embodiment for the specific structure of the autonomous operation device 100, and details will not be repeated here.

A specific process of the method for adding a function to an autonomous operation device in this embodiment is as shown in FIG. 30.

Step 301: Disassemble the non-magnetic wheel assembly mounted on the mounting portion of the autonomous operation device.

Step 302: Mount a traveling wheel assembly including a magnetic assembly on the mounting portion of the autonomous operation device.

Step 303: Control the autonomous operation device to enter a working mode including abnormal traveling state detection.

Specifically, when the non-magnetic wheel assembly 7 without the magnetic assembly 4 is mounted on the mounting portion 112 of the autonomous operation device 100, the autonomous operation device 100 is in a working mode without abnormal traveling state detection, that is, the control program of the autonomous operation device 100 does not include an abnormal traveling state detection program. Subsequently, when the non-magnetic wheel assembly 7 mounted on the mounting portion 112 of the autonomous operation device 100 is disassembled, and the traveling wheel assembly 6 including the magnetic assembly 4 is mounted on the mounting portion 112 of the autonomous operation device 100, the control module 108 controls the autonomous operation device 100 to enter the working mode including abnormal traveling state detection, that is, when the type of the wheel assembly mounted on the autonomous operation device 100 changes, the working mode of the autonomous operation device 100 is correspondingly switched.

The control module 108 controls the autonomous operation device 100 to enter a working mode including abnormal traveling state detection, including: updating the control program of the autonomous operation device 100 to load a program including abnormal traveling state detection into the control module 108 of the autonomous operation device 100. A way of updating the control program by the control module 108 may include: when the traveling wheel assembly 6 including the magnetic assembly 4 is mounted on the mounting portion 112 of the autonomous operation device 100, automatically updating the control program on line, or sending a reminder message to remind the user to update the control program, so that the user can manually update the control program by loading a program in an external storage device, or adjust a working mode switch on the autonomous operation device 100 to update the control program, or manually control the autonomous operation device 100 to be on line to update the control program.

A ninth embodiment of the present application provides a method for removing a function from an autonomous operation device, which is applied to the autonomous operation device in the third embodiment, and can control the autonomous operation device to switch to a working mode without abnormal traveling state detection after a non-magnetic wheel assembly without a magnetic assembly is mounted in the autonomous operation device. Reference is made to the relevant content in the third embodiment for the specific structure of the autonomous operation device 100, and details will not be repeated here.

A specific process of the method for removing a function from an autonomous operation device in this embodiment is as shown in FIG. 31.

Step 401: Disassemble the traveling wheel assembly including the magnetic assembly mounted on the mounting portion of the autonomous operation device.

Step 402: Mount a non-magnetic wheel assembly on the mounting portion of the autonomous operation device.

Step 403: Control the autonomous operation device to enter a working mode without abnormal traveling state detection.

Specifically, when the traveling wheel assembly 6 including the magnetic assembly 4 is mounted on the mounting portion 112 of the autonomous operation device 100, the autonomous operation device 100 is in a working mode including abnormal traveling state detection, that is, the control program of the autonomous operation device 100 includes an abnormal traveling state detection program. Subsequently, when the traveling wheel assembly 6 including the magnetic assembly 4 mounted on the mounting portion 112 of the autonomous operation device 100 is disassembled, and the non-magnetic wheel assembly 7 is mounted on the mounting portion 112 of the autonomous operation device 100, the control module 108 controls the autonomous operation device 100 to enter the working mode without abnormal traveling state detection, that is, when the type of the wheel assembly mounted on the autonomous operation device 100 changes, the working mode of the autonomous operation device 100 is correspondingly switched.

The control module 108 controls the autonomous operation device 100 to enter a working mode without abnormal traveling state detection, including: updating the control program of the autonomous operation device 100 to load a program without abnormal traveling state detection into the control module 108 of the autonomous operation device 100. A way of updating the control program by the control module 108 may include: when the non-magnetic wheel assembly 7 without the magnetic assembly 4 is mounted on the mounting portion 112 of the autonomous operation device 100, automatically updating the control program on line, or sending a reminder message to remind the user to update the control program, so that the user can manually update the control program by loading a program in an external storage device, or adjust a working mode switch on the autonomous operation device 100 to update the control program, or manually control the autonomous operation device 100 to be on line to update the control program.

A tenth embodiment of the present application provides a control method for an autonomous operation device, which is applied to the autonomous operation device in the third embodiment, and can control the autonomous operation device to detect an abnormal traveling state when it is detected that the mounting portion of the autonomous operation device is adapted to the traveling wheel assembly. Reference is made to the relevant content in the third embodiment for the specific structure of the autonomous operation device 100, and details will not be repeated here.

A specific process of the control method for the autonomous operation device in this embodiment is as shown in FIG. 32.

Step 501: Determine whether adaption of the traveling wheel assembly to the mounting portion is recognized through the third sensor. If so, step 502 is performed; otherwise, step 501 is performed.

Step 502: Control the autonomous operation device to detect an abnormal traveling state.

Specifically, the third sensor 1106 is used for recognizing adaption of the traveling wheel assembly 6 to the mounting portion 112 and/or adaption of the non-magnetic wheel assembly 7 to the mounting portion 112. The third sensor 1106 is used for recognizing whether the wheel assembly adapted to the autonomous operation device 100 includes the magnetic assembly 4.

When the control module 108 recognizes through the third sensor 1106 that the traveling wheel assembly 6 including the magnetic assembly 4 is adapted to the mounting portion 112, the control module 108 controls the autonomous operation device 100 to detect an abnormal traveling state, that is, controls the autonomous operation device 100 to enter the working mode including abnormal traveling state detection, or activates the abnormal traveling state detection function to determine whether the autonomous operation device 100 is in an abnormal traveling state; or when the control module 108 recognizes through the third sensor 1106 that the traveling wheel assembly including the magnetic assembly 4 is not adapted to the mounting portion 112, the control module 108 controls the autonomous operation device 100 to maintain the current working mode and continues to detect whether the traveling wheel assembly including the magnetic assembly 4 is adapted to the mounting portion 112.

In one example, when the first sensing member 622 is disposed in the traveling wheel assembly 6 and the first sensing member 622 is mounted on the mounting seat 62 of the traveling wheel assembly 6, if the third sensor 1106 senses the first sensing member 622, it is determined that the adaption of the traveling wheel assembly 6 to the mounting portion 112 is recognized; or when the second sensing member 624 is disposed in the traveling wheel assembly 6 and the second sensing member 624 is mounted on the mounting seat 62 of the traveling wheel assembly 6, if the third sensor 1106 senses the second sensing member 624, it is determined that the adaption of the traveling wheel assembly 6 to the mounting portion 112 is recognized.

An eleventh embodiment of the present application provides a non-transient computer-readable storage medium storing instructions executable by the control module 108, wherein the executable instructions are configured to enable the processor of the autonomous operation device 100 to perform operations including the foregoing control method.

A twelfth embodiment of the present application provides an autonomous operation device 100, including a main mechanism 102; a moving mechanism 104, configured to support the main mechanism 102 on the ground and drive the main mechanism 102 to move on the ground; a working mechanism 106, configured to perform a specific operation task; and a control module 108, configured to control the autonomous operation device 100 to operate autonomously according to a preset program, where the control module 108 includes the foregoing non-transient computer-readable storage medium.

A thirteenth embodiment of the present application provides an autonomous operation device 100, including a main mechanism 102; a moving mechanism 104, configured to support the main mechanism 102 on the ground and drive the main mechanism 102 to move on the ground; a working mechanism 106, configured to perform a specific operation task; and a control module 108, configured to control the autonomous operation device 100 to operate autonomously according to a preset program, where the control module 108 includes embodiments configured to execute the foregoing control method.

The above has described in detail the preferred embodiments of the present application, but it should be understood that various aspects of the embodiments can be modified to adopt other embodiments by incorporating aspects, features, and concepts of various patents, applications, and publications if necessary.

Considering the detailed description in the preceding text, these and other variations can be made to the embodiments. Generally speaking, the terms used in the claims should not be construed as limited to the specific embodiments disclosed in the specification and claims, but should be understood to encompass all possible embodiments along with the full scope of the claims.

## Claims

1. A traveling wheel comprising a wheel body, wherein the wheel body comprises a hub portion, a rim portion, at least one receiving cavity configured between the hub portion and the rim portion, and at least one magnetic assembly disposed inside the receiving cavity; and the magnetic assembly is configured to roll towards at least one preset direction within the receiving cavity.

2. The traveling wheel of claim 1, wherein the traveling wheel comprises at least one box body, the box body is disposed between the hub portion and the rim portion, and an inner cavity of the box body forms the receiving cavity.

3. The traveling wheel of claim 1, wherein the traveling wheel further comprises a wheel cover portion, a wheel inner cavity is enclosed by the wheel cover portion, the rim portion, and the hub portion, and the receiving cavity is formed by the wheel inner cavity.

4. The traveling wheel of claim 1, wherein the traveling wheel further comprises a wheel cover portion, and a wheel inner cavity is enclosed by the wheel cover portion, the rim portion, and the hub portion; the wheel inner cavity is configured to comprise rib plates; and the receiving cavity is enclosed by the rib plates, or by the rib plates and the wheel cover portion and/or the rim portion.

5. The traveling wheel of claim 1, wherein the magnetic assembly has a first feature line defined as a longest line segment among lines connecting any two points on an outer surface of the magnetic assembly; and the first feature line of the magnetic assembly may rotate a preset angle towards the at least one preset direction.

6. The traveling wheel of claim 1, wherein a magnetic moment feature line obtained by connecting any two points on the outer surface of the magnetic assembly is parallel to a magnetic moment direction of the magnetic assembly, and the magnetic moment feature line of the magnetic assembly may rotate a preset angle towards the at least one preset direction.

7. The traveling wheel of claims 5 or 6, wherein the preset direction at least comprises a rolling direction of the traveling wheel and/or a radial direction of the traveling wheel.

8. The traveling wheel of claim 7, wherein the preset angle is greater than or equal to 90 degrees.

9. The traveling wheel of claim 8, wherein the preset angle is greater than or equal to 180 degrees.

10. The traveling wheel of claim 1, wherein the receiving cavity comprises a cavity inner wall in contact with the outer surface of the magnetic assembly, a stop structure is disposed on the cavity inner wall, and the stop structure is used for limiting sliding of the magnetic assembly along the cavity inner wall in the preset direction.

11. The traveling wheel of claim 10, wherein the stop structure comprises a plurality of ridges, and each ridge is parallel to a rotation axis of the traveling wheel; and when the magnetic assembly is stationary between two adjacent ridges, the magnetic assembly is in contact with at least one ridge in the two adjacent ridges and the cavity inner wall between the two adjacent ridges.

12. The traveling wheel of claim 11, wherein a height of the ridge is greater than or equal to half of a length of a second feature line, and the second feature line is defined as a longest line segment among line segments formed by connecting a center of the magnetic assembly with any point on the outer surface of the magnetic assembly.

13. The traveling wheel of claim 12, wherein the height of the ridge is greater than or equal to two thirds of the length of the second feature line.

14. The traveling wheel of claim 1, wherein the receiving cavity comprises a cavity inner wall in contact with the outer surface of the magnetic assembly, and a static friction coefficient between the cavity inner wall and the outer surface of the magnetic assembly is greater than or equal to 0.3.

15. The traveling wheel of claim 14, wherein the static friction coefficient between the cavity inner wall and the outer surface of the magnetic assembly is greater than or equal to 0.5.

16. The traveling wheel of claim 1, wherein the receiving cavity comprises a cavity inner wall in contact with the outer surface of the magnetic assembly, and texture structures are configured on the cavity inner wall and/or the outer surface of the magnetic assembly.

17. The traveling wheel of claim 1, wherein the receiving cavity is an arc-shaped cavity extending in a circumferential direction of the traveling wheel, and the preset direction comprises a rolling direction of the traveling wheel.

18. The traveling wheel of claim 1, wherein an outer contour of the magnetic assembly is in any of the following shapes: sphere, cylinder, frustum, bipyramid, bifrustum, biconical column, biconical frustum, prism, or convex polyhedron.

19. The traveling wheel of claim 18, wherein the outer contour of the magnetic assembly is in a shape of a regular hexahedron, a regular dodecahedron, a regular icosahedron, or a double regular N pyramid stand, wherein N is an integer greater than or equal to 3 and less than or equal to 10.

20. The traveling wheel of claim 18, wherein N is equal to 8.

21. The traveling wheel of claim 18, wherein the outer contour of the magnetic assembly is cylindrical, and the magnetic assembly is a magnet radially magnetized based on a circular cross section of the outer contour of the magnetic assembly.

22. The traveling wheel of claim 1, wherein when the rotation axis of the traveling wheel is parallel to a travel surface, projections of at least some receiving cavities on the travel surface are located at within a projection of the rim portion on the travel surface.

23. The traveling wheel of claim 1, wherein the magnetic assembly comprises a magnetic body and a cover body covering the magnetic body.

24. The traveling wheel of claim 23, wherein the cover body is made of an elastic material.

25. The traveling wheel of claim 24, wherein the elastic material is rubber.

26. The traveling wheel of claim 25, wherein the elastic material is silicone rubber.

27. The traveling wheel of claim 1, wherein the receiving cavity is a sealed cavity.

28. An autonomous operation device, comprising:
a main mechanism;
a moving mechanism, wherein the moving mechanism is disposed on the main mechanism, the moving mechanism is used for supporting the main mechanism on a travel surface and driving the main mechanism to move on the travel surface, and the moving mechanism comprises the traveling wheel of any one of claims 1 to 27;
a working mechanism, wherein the working mechanism is disposed on the main mechanism, and the working mechanism is used for performing an operation task;
a control module, wherein the control module is disposed on the main mechanism, and
the control module is used for controlling the working mechanism to perform a set operation task according to a received control instruction; and
a detection module, wherein the detection module comprises a first sensor in communication connection with the control module, and the first sensor is used for obtaining a magnetic field change signal generated by movement of the magnetic assembly in the traveling wheel;
wherein the control module is used for determining a rotation state of the traveling wheel according to the magnetic field change signal.

29. The autonomous operation device of claim 28, wherein the moving mechanism comprises: at least one driving wheel and at least one driven wheel; and the driving wheel or the driven wheel is the traveling wheel.

30. The autonomous operation device of claim 28, wherein the first sensor comprises a Hall sensor.

31. The autonomous operation device of claim 28, wherein a minimum distance between the magnetic assembly in the traveling wheel and the first sensor is not greater than 80 mm.

32. The autonomous operation device of claim 28, wherein the minimum distance between the magnetic assembly in the traveling wheel and the first sensor is not greater than 50 mm.

33. The autonomous operation device of claim 28, wherein a quotient of a radius of the traveling wheel divided by the minimum distance between the magnetic assembly in the traveling wheel and the first sensor is less than or equal to 1.0.

34. The autonomous operation device of claim 28, wherein the quotient of the radius of the traveling wheel divided by the minimum distance between the magnetic assembly in the traveling wheel and the first sensor is less than or equal to 0.7.

35. A traveling wheel state detection method, applied to the autonomous operation device of any one of claims 28 to 34, the method comprising:
obtaining a magnetic field change signal generated by the movement of the magnetic assembly in the traveling wheel of the autonomous operation device; and
determining the rotation state of the traveling wheel according to the magnetic field change signal.

36. The traveling wheel state detection method of claim 35, wherein the determining the rotation state of the traveling wheel the magnetic field change signal comprises:
when receiving the magnetic field change signal, determining whether the strength of the magnetic field change signal is beyond a preset strength range; and
if the strength of the magnetic field change signal is beyond the preset strength range, determining that the traveling wheel is in a rotating state.

37. The traveling wheel state detection method of claim 35, wherein when the magnetic field change signal is received, if the strength of the magnetic field change signal is within the preset strength range within a first preset time, it is determined that the traveling wheel is in a non-rotating state.

38. The traveling wheel state detection method of claim 35, wherein if the magnetic field change signal is not received within a second preset time, it is determined that the traveling wheel is in the non-rotating state.
